**Europäisches Patentamt**

**European Patent Office**

**Office européen des brevets**

(19)

(11) Veröffentlichungsnummer : **0 208 333 B1**

(12) # EUROPÄISCHE PATENTSCHRIFT

(45) Veröffentlichungstag der Patentschrift :
15.03.89

(21) Anmeldenummer : 86109490.2

(22) Anmeldetag : 11.07.86

(51) Int. Cl.⁴ : **B 60 R   1/06**

(54) **Fahrzeug-Aussenspiegel mit Rastvorrichtung.**

(30) Priorität : 12.07.85 DE 8520122 U

(43) Veröffentlichungstag der Anmeldung :
14.01.87 Patentblatt 87/03

(45) Bekanntmachung des Hinweises auf die Patenterteilung : 15.03.89 Patentblatt 89/11

(84) Benannte Vertragsstaaten :
AT BE CH DE FR GB IT LI LU NL SE

(56) Entgegenhaltungen :
DE--A-- 3 248 759
DE--U-- 7 835 006

(73) Patentinhaber : **HOHE KG**
**Hauptstrasse 36**
**D-6981 Collenberg (DE)**

(72) Erfinder : **Seubert, Richard**
**Meister-Hermann-Strasse 8**
**D-8760 Miltenberg (DE)**

(74) Vertreter : **Zinngrebe, Horst, Dr.rer.nat.**
**Saalbaustrasse 11**
**D-6100 Darmstadt (DE)**

## Beschreibung

Die Erfindung betrifft einen Fahrzeug-Außenspiegel mit einem Fuß, auf welchem ein ein Spiegelglas tragendes Gehäuse um die Achse eines Rohrstücks schwenkbar befestigt ist, sowie mit einer zwei Rastelemente aufweisenden Rastvorrichtung, welche an einem Fußteil und an einem dem Fußteil benachbarten Abschnitt des Gehäuses ausgebildet ist und durch gegen Federdruck lösbaren Formenschluß der Rastelemente eine erste Normalstellung des Gehäuses relativ zum Fuß definiert.

Bei dem aus der deutschen Gebrauchsmusterschrift 78 35 006 bekannten Außenspiegel ist die Rastvorrichtung durch eine Profilierung der Auflagefläche des unteren Abschnitts auf dem Fuß verwirklicht, so daß bei Formenschluß zwischen den Rastflächen der Außenspiegel die Normalstellung einnimmt. Das Gehäuse wird in der Einraststellung durch die Federbelastung des Rohrstutzens gehalten. Bei hinreichend großem auf das Gehäuse um die Achse wirkenden Drehmoment befreit sich das Gehäuse aus der Raststellung und kann nach vorne oder hinten an die Fahrzeugkarosserie angeklappt werden, an der der Fuß befestigt ist.

Die durch die Raststellung definierte Normalstellung des Gehäuses muß bei einem Fahrzeug mit Linkslenkung eine andere sein als bei einem Fahrzeug mit Rechtslenkung. Dies hat zur Folge, daß für Fahrzeuge mit Rechtslenkung und solche mit Linkslenkung wenigstens zwei Ausführungen von Füßen bereit gehalten werden müssen, die sich durch die Winkellage der Profilierung relativ zur Achse unterscheiden. Dadurch verteuert sich nicht nur die Herstellung des Außenspiegels sondern auch dessen Lagerhaltung für die beiden genannten Fahrzeugtypen.

Der Erfindung liegt daher die Aufgabe zugrunde, einen für rechtsgelenkte und linksgelenkte Fahrzeuge gleichartigen Außenspiegel zu schaffen, dessen Normalstellung nach fertigem Zusammenbau des Außenspiegels durch einfache Maßnahmen auf den Fahrzeugtyp eingestellt werden kann, für den der Außenspiegel bestimmt ist.

Dazu ist bei dem eingangs genannten Fahrzeugaußenspiegel erfindungsgemäß vorgesehen, daß eines der beiden Rastelemente in einer Kontur des Fußteils oder des Abschnittes in einer von zwei um die Achse winkelmäßig versetzten Lagen, welche die erste und eine zweite Normalstellung des Gehäuses definieren, eingefangen und von außen lageversetzbar ist. Dadurch kann der Außenspiegel sowohl für rechtsgelenkte wie auch für linksgelenkte Fahrzeuge verwendet werden, wobei dann lediglich die Rastvorrichtung entsprechend eingestellt werden muß, der Außenspiegel konstruktiv jedoch unverändert bleiben kann.

In einer ersten bevorzugten Ausführungsform der Erfindung ist vorgesehen, daß ein von dem Gehäuse an einem dem unteren Abschnitt gegenüberliegenden oberen Abschnitt radial abstehender Arm in eine am Fuß ausgebildete, auf die Achse zentrierte Kulisse eingreift, wobei die Rastvorrichtung zwischen dem Arm und der Kulisse ausgebildet ist. Hierbei erweist es sich als zweckmäßig, wenn in die Außenperipherie einer am Arm ausgebildeten bogenförmigen Leiste wenigstens ein Sackloch eingebracht ist, und wenn in der fußseitigen Wange wenigstens eine Bohrung vorgesehen ist, in der ein axial nachgiebiger Raststift zum Eingriff in das Sackloch gehalten ist. Dabei können in der Wange mehrere Bohrungen zum wahlweisen Einsatz eines Raststiftes und in der Außenperipherie des Steges ein einziges Sackloch angebracht sein.

Eine besonders zweckmäßige Ausgestaltung der Erfindung sieht vor, daß die Rastvorrichtung in einen Bereich, der nahe an der Gelenkverbindung zwischen Gehäuse und Fuß liegt, integriert ist, so daß die äußere Gestalt des Außenspiegels gemäß Gebrauchsmusterschrift 78 35 006 unverändert beibehalten werden kann. Dabei erweist es sich als zweckmäßig, wenn eines der beiden Rastelemente in Richtung auf das andere Rastelement elastisch gehalten ist. Bei dieser Ausführungsform der Erfindung kann eine das Rohrstück axial belastende Feder entweder ganz entfallen oder auf die Sicherstellung eines dauerhaften, wackelfreien Sitzes des Gehäuses auf dem Fuß ausgelegt werden.

Eine besonders flache Bauweise ergibt sich, wenn eines der beiden Rastelemente in Weiterbildung der Erfindung eine Blattfeder ist.

Eine besonders einfache Gestaltung der Rastelemente ergibt sich, wenn in Weiterbildung der Erfindung das erste der beiden Rastelemente eine zylindrische oder V-förmige Nase und das zweite Rastelement eine der Nase formlich angepaßte, zylindrische oder V-förmige Einsenkung aufweisen. Danach kann die Nase beispielsweise an das Fußteil fest angeformt sein und von diesem vorstehen und die Einsenkung kann in eine schlanke Blattfeder eingedrückt sein, die in Kontur des Gehäuseabschnittes lageversetzbar aufgenommen sein kann.

Bevorzugte Ausführungsformen der Erfindung sehen jedoch vor, daß die Nase an einem Rastkörper ausgebildet ist, welcher in einer Ausnehmung des Fußteils lageversetzbar beherbergt ist, wobei das zweite Rastelement an dem Gehäuseabschnitt ausgebildet ist.

Der Rastkörper kann in einer Ausführungsform der Erfindung ein axial federnder Ring mit radial vorstehender, am Ende abgebogener Fahne sein, das in einer von zwei winkelmäßig bezüglich der Achse versetzten Nuten eingefangen ist, wobei das erste Rastelement aus mehreren Erhebungen besteht, welche aus dem Ring ausgeprägt sind, und das zweite Rastelement aus mehreren Einsenkungen besteht, welche in winkelmäßiger Anpassung an die Erhebungen in einer auf die Oberseite des Fußteils zuweisenden Unterseite des Abschnittes ausgebildet sind. Der Ring ist winkellagemäßig durch Ergreifen des Fahnen-

de von außen versetzbar.

In einer anderen Ausführungsform der Erfindung besteht der Rastkörper aus einer gestanzten Platte mit einem vom Rohrstück durchdrungenen Langloch, von deren Vorderkante nebeneinander eine nach außen weisende Nase sowie ein Lappen vorstehen, welch letzterer in einer von zwei winkelmäßig versetzten Nuten eingefangen ist. Die Nase kann unter der Wirkung einer an der Platte angreifenden und sich am Fußteil abstützenden Feder in ein Blindloch eingreifen, welches als zweites Rastelement in eine der Stirnseite des Fußteils benachbarten Wange des Abschnittes eingebracht ist.

In einer weiteren Ausführungsform der Erfindung ist ein im Querschnitt runder Rastkörper in einer in der Stirnseite des Fußteils vorgesehenen Zylinderbohrung mit Hinterschnitt unter der Wirkung einer sich am Fußteil abstützenden Feder durch eine radial abstehende und in den Hinterschnitt greifende Zunge mit Druck nach außen gehalten, wobei eine aus der Stirnfläche des Rastkörpers nach außen vorstehende Nase in eine Blindbohrung an der Wange des Abschnittes eingreifen kann. Der die Zylinderbohrung kreisförmig erweiternde Hinterschnitt erlaubt eine Drehung des Rastkörpers um 180° mittels eines von außen in einen Schlitz an der Stirnfläche des Rastkörpers eindringenden Schraubendrehers oder dergleichen. Die Mittellinie der Zylinderbohrung und damit des Rastkörpers liegt radial zur Achse, und die Nase ist andererseits asymmetrisch zur Mittellinie ausgebildet, sodaß zwei um 180° unterschiedene Drehlagen des Rastkörpers die erste und zweite Normalstellung definieren.

In noch einer weiteren Ausführungsform der Erfindung besteht der Rastkörper aus einem im wesentlichen quaderförmigen Metallstück, aus dessen einer Stirnseite eine Nase asymmetrisch zur Mittelebene des Metallstücks vorsteht. Das Stück ist in einer Vertiefung in der Oberseite des Fußteils formschlüssig so gehalten, daß die Nase aus der Stirnseite des Fußteils nach außen vorsteht und in eine Blindbohrung in der Wange des Abschnitts eingefangen sein kann. Durch Umlegen des Stückes in der Vertiefung um 180° kommt seine Nase in die erwünschten winkelmäßig bezüglich der Achse versetzte Lage.

Schließlich ist in einer neben der das Rohrstück aufnehmenden Bohrung des Fußteils ausgebildeten Vertiefung in einer weiteren Ausführungsform der Erfindung ein mit einer durchgehenden Gewindebohrung versehener und einen federbelasteten, über die Oberseite des Fußteils hinausragenden Stift aufweisender Rastkörper beherbergt, welcher mittels einer von außen zugänglichen, die Gewindebohrung durchdringenden Schraube zwischen zwei winkelmäßig bezüglich der Achse versetzten Lagen in der Vertiefung verschiebbar ist. Der federnde Stift greift wieder in eine Blindbohrung am Abschnitt ein.

Weitere zweckmäßige Ausführungsformen der Erfindung sind in den Unteransprüchen angegeben.

Unter Bezugnahme auf die beigefügte Zeichnung werden nachstehend mehrere Ausführungsformen der Erfindung im einzelnen erläutert. Es zeigen :

Fig. 1 eine teilweise geschnittene Ansicht eines des fahrzeugnahen Teiles eines Fahrzeug-Außenspiegels mit Fuß und benachbartem Gehäuseteil, in Fahrtrichtung gesehen ;

Fig. 2 eine schematische Draufsicht auf den Außenspiegel nach Fig. 1 ;

Fig. 3 eine schematische Ansicht, teilweise im Schnitt, des dem Fuß benachbarten Gehäuseteils ;

Fig. 4 eine Draufsicht auf das Gehäuseteil nach Fig. 3 ;

Fig. 5 eine Ansicht der teilweise geschnittenen Kulisse ;

Fig. 6 eine Ansicht der Kulisse nach Fig. 5 aus der Richtung x ;

Fig. 7 eine schematische Ansicht der Kulisse von oben ;

Fig. 8 eine Ansicht des Armes aus der Richtung y gemäß Fig. 4 ;

Fig. 9 eine Ansicht, teilweise im Schnitt, eines Spiegel fußes sowie des diesem benachbarten Abschnittes des Spiegelgehäuses als Ausgangspunkt der Erfindung ;

Fig. 10 eine schematische Draufsicht auf die Oberseite des Fußteils mit aufgelegtem Federring gemäß einer Ausführungsform ;

Fig. 11 eine schematische Schnittansicht gemäß der Linie CC aus Fig. 10 ;

Fig. 12 eine schematische Ansicht y des Abschnitts von unten gemäß Fig. 11 ;

Fig. 13 eine schematische Schnittansicht gemäß der Linie AA aus Fig. 10 ;

Fig. 14 eine schematische Schnittansicht gemäß der Linie BB aus Fig. 10 ;

Fig. 15 eine schematische Darstellung der Ansicht X aus Fig. 10 ;

Fig. 16 eine schematische Draufsicht auf das Fußteil gemäß einer weiteren Ausführungsform mit strichpunktiert angedeutetem Gehäuse ;

Fig. 17 eine schematische Schnittansicht längs der Linie DD aus Fig. 16 ;

Fig. 18 eine Draufsicht auf den Rastkörper gemäß Fig. 16 ;

Fig. 19 eine schematische Draufsicht auf des Fußteil gemäß einer weiteren Ausführungsform ;

Fig. 20 eine schematische Schnittansicht längs der Linie EE aus Fig. 19 ;

Fig. 21 eine schematische Stirnansicht des Fußteils mit Rastkörper gemäß Fig. 19 ;

Fig. 22 eine schematische Strinansicht des Rastkörpers aus Fig. 21 ;

Fig. 23 einen Axialschnitt durch den Rastkörper nach Fig. 21 ;

Fig. 24 eine schematische Draufsicht auf das Fußteil gemäß einer weiteren Ausführungsform ;

Fig. 25 eine schematische Draufsicht auf den Rastkörper gemäß Fig. 24 ;

Fig. 26 eine schematische Ansicht eines Schnittes längs der Mittellinie durch den rastkörper aus Fig. 24 ;

Fig. 27 eine schematische Draufsicht auf das Fußteil gemäß einer weiteren Ausführungsform ;

Fig. 28 und 29 eine Seiten- bzw. Stirnansicht des Rastkörpers aus Fig. 28.

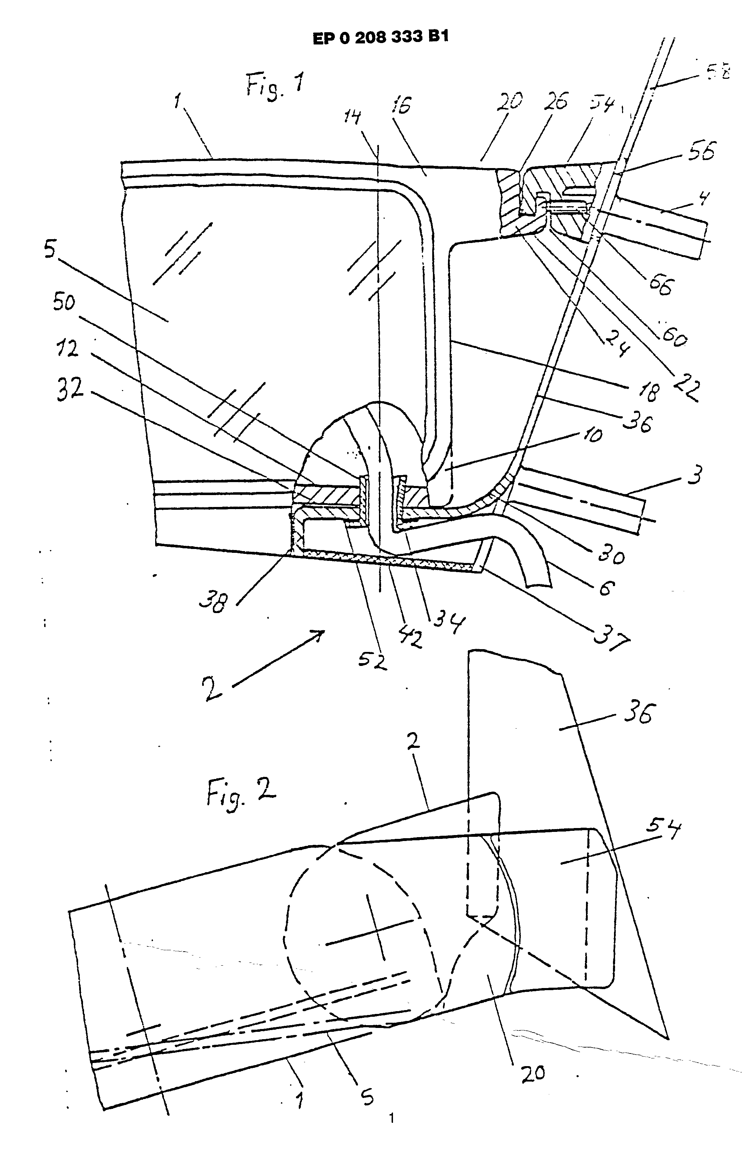

Der dargestellte Außenspiegel ist dazu bestimmt, an der linken Seite einer Fahrzeugkarosserie befestigt zu werden, und zwar unabhängig davon, ob das Fahrzeug linksgelenkt oder rechtsgelenkt ist. Der Außenspiegel besteht ans einem Gehäuse 1 und einem Fuß 2, welcher mittels Gewindebuchsen 3, 4 in an sich bekannter Weise beispielsweise im vorderen Fensterdreieck einer linken vorderen Kraftfahrzeugtür befestigt werden kann. Der von dem Gehäuse 1 umschlossene Rückspiegel 5 ist im dargestellten Beispiel über im einzelnen nicht dargestellte, im Gehäuse 1 beherbergte Einrichtungen relativ zum Gehäuse 1 in an sich bekannter Weise verstellbar. Zwei verschiedene Stellungen des Rückspiegels 5 sind in Fig. 2 gestrichelt angedeutet. Die Verstellung des Rückspiegels 5 kann vom Innern des Fahrzeugs aus veranlaßt werden, wozu sich zwischen den genannten Einrichtungen und dem Fahrzeuginneren ein Kabel 6 erstreckt, welches beispielsweise mehrere elektrische Zuleitungen enthalten kann.

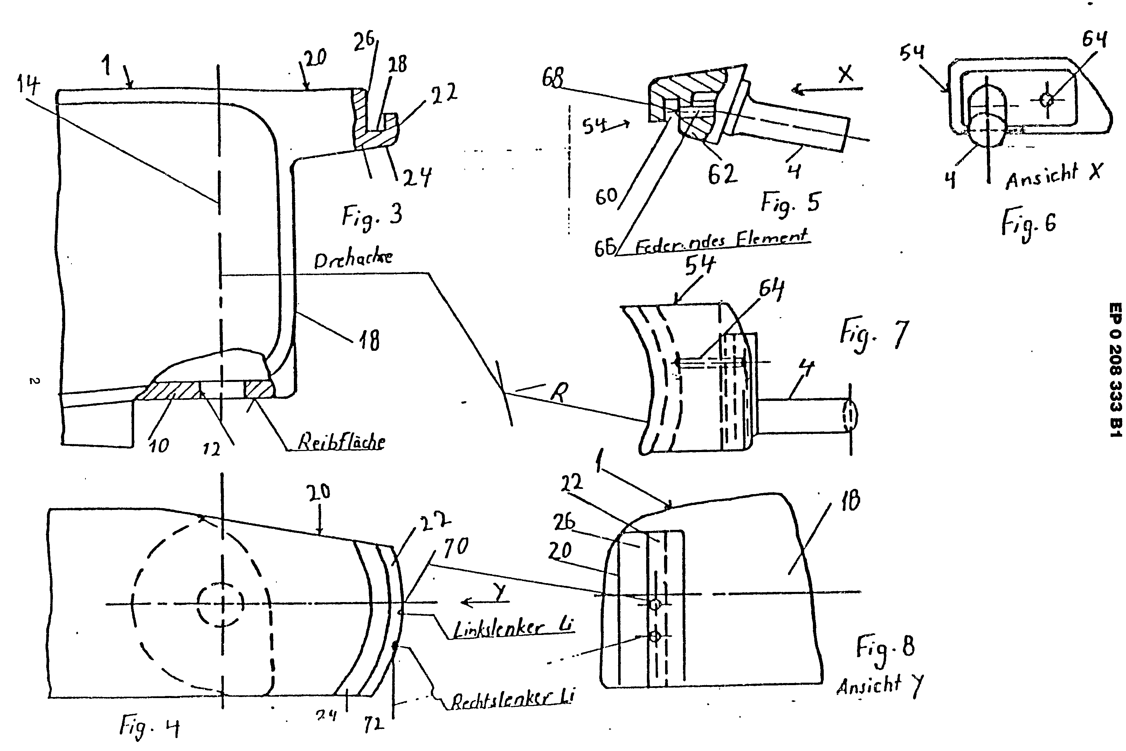

Das Gehäuse 1 besitzt einen dem Fuß 2 zugekehrten unteren Abschnitt 10, der bei Draufsicht auf den Rückspiegel 5 und bei dem hier dargestellten linken Außenspiegel der rechte untere Eckabschnitt und bei einem rechten Außenspiegel bei entsprechender Betrachtungsweise dann der linke untere Eckabschnitt ist, und an welchem der hier im wesentlichen ebene Gehäuseboden zur Bildung einer kreisrunden Öffnung 12 durchbrochen ist. Von dem dem unteren Abschnitt 10 in Richtung der Achse 14 der Öffnung 12 gegenüberliegenden oberen Abschnitt 16 des Gehäuses 1 steht quer zur inneren Seitenwand 18 des Gehäuses 1 ein Arm 20 etwa von der Breite der Gehäusetiefe radial ab. An seinem äußeren Ende ist der dort massive Arm mit einer senkrecht zu der Schnittebene der Fig. 1 runden Leiste 22 versehen, die von der Öffnung 12 wegweisend sich in Richtung der Achse 14 erstreckt und eine Krümmung besitzt, deren Mittelpunkt in der Achse 14 liegt. Die Leiste 22 ist über einen tiefer liegenden Steg 24 an den übrigen Teil des Armes 20 angeformt, so daß zwischen der Leiste 22 und der benachbarten Stirnwand 26 des Armes eine kreisbogenförmige Nut 28 gebildet ist, deren Krümmungsmittelpunkt ebenfalls in der Achse 14 liegt. Wie aus den Fig. 2 und 4 zu erkennen ist, entspricht die Länge der Nut 28 etwa einem viertel Kreisbogen.

Der Fuß 2 weist in seinem unteren Teil 30 eine sich quer zur Achse 14 erstreckende Lagerfläche 32 auf, welche einen mit der Öffnung 12 gleichgroßen und bei an den Fuß 2 montiertem Gehäuse mit der Öffnung 12 fluchtenden Durchbruch 34 besitzt. Der untere Teil 30 ist aus einer Montageplatte 36 herausgeformt, deren Gestalt durch die Montagebedingungen am Fahrzeug bestimmt ist. Zwischen dem nach unten abgekröpften freien Ende 38 des unteren Teils 30 und dem unteren Abschnitt 37 der Montageplatte 36 ist ein zum Zusammenbau des Außenspiegels freier Bauraum beispielsweise zur Durchführung des Kabels 6 geschaffen, der am fertigen Außenspiegel durch eine Platte 42 verschlossen ist. Ein an einem Ende nach außen umbördelter Rohrstutzen 50, dessen Außendurchmesser gleich der lichten Weite der Öffnung 12 und des Durchbruchs 34 ist, ist durch die Öffnung 12 und dem Durchbruch 34 hindurchgeführt, wobei zwischen der Umbördelung des Rohrstutzens 50 und der Unterseite der Lagerfläche 32 eine in Richtung der Achse 14 wirkende Tellerfeder 52 zwischengelegt ist. An dem der Umbördelung gegenüberliegenden Ende des Stutzens 50 wird dieser soweit aufgeweitet, daß das Gehäuse 1 auf dem Fuß 2 fest befestigt ist, jedoch um die Achse 14, die gleichzeitig Mittellinie des Rohrstutzens 50 ist, nach Überwindung der Reibung zwischen der Lagerfläche 32 und der Unterseite des Gehäusebodens schwenkbar bleibt. Da der untere Abschnitt 10 durch die Umbördelung und das Aufweiten des Rohrstutzens auf die Lagerfläche 32 aufgedrückt wird, ist die relativ großflächige Lagerfläche 32 eine stabile Auflage für des Gehäuse, wobei die relative große Reibung zwischen der Außenfläche des unteren Abschnitts 10 und der Lagerfläche 42 ein zu leichtgängiges Verschwenken des Spiegelgehäuses um die Achse 14 verhindern. Wie in Fig. 1 dargestellt wird das Kabel 6 durch den Rohrstutzen 50 hindurch in das Innere des Gehäuses 1 geführt.

Auf einem Halter 54, der sich mit seiner abstehenden Gewindebuchse 4 durch eine Öffnung 56 im oberen Abschnitt 58 der Montageplatte 36 in Höhe etwa der Leiste 22 erstreckt und mit einer Schulter 57 auf dem Abschnitt 58 aufsitzt, besitzt an seinem äußeren, der Gewindebuchse 4 gegenüberliegenden Ende eine nach unten offene, kreisbogenförmige Nut 60, in welche die Leiste 22 von unten eingreifen kann. Wie Fig. 2 zeigt, ist der Halter 54 windschnittig als formliche Verlängerung des Armes 20 gestaltet, so daß die Nut 60 sich wie die Leiste 22 etwa über einen viertel Kreis erstreckt, dessen Mittelpunkt in der Achse 14 (vgl. Fig. 3 und 7) liegt.

In den Teil 62 des Halters 54, der sich zwischen der Gewindebuchse 4 und der Nut 60 erstreckt, ist seitlich von der Gewindebuchse 4 eine Durchgangsbohrung 64 eingebracht, in welcher ein Raststift 66 axial nachgiebig gehalten ist. Der von der Nut 60 wegweisende Kopf des Raststiftes 66 ist vor dem Einbau des Halters 54 von außen zugänglich und mit einer nicht dargestellten Feder in axialer Richtung beaufschlagt. Die kegelige Spitze 68 des Raststifts 66 erstreckt sich seitlich in die Nut 60 und reitet auf der Außenfläche der Leiste 22, wenn diese, wie Fig. 1 zeigt, in die Nut 60 eingreift.

Zur Festlegung einer für das Fahrzeug, an welches der beschriebene Außenspiegel linksseitig angebracht werden soll, geeigneten Normalstellung des Gehäuses sind in die Außenfläche der Leiste 22 im Wege der Spitze 68 ein erstes Sackloch 70 eingebracht, so daß durch Einfallen der Spitze 68 des Raststifts 66 in das Sackloch 70 die Normalstellung des Spiegelgehäuses 1 definiert ist.

Um eine für ein anderes Fahrzeug, beispielsweise ein rechtsgelenktes Fahrzeug, geeignete andere Normalstellung zu definieren, ist in der Bahn der Spitze 68 auf der Leiste 22 ein weiteres Sackloch 72 vorgesehen. Man sieht, daß zur Festlegung eventuell benötigter weiterer Normalstellungen des Gehäuses 1 weitere Sacklöcher in die Außenfläche der Leiste 22 eingebracht werden können.

Auf diese Weise kann das Gehäuse 1 nach entsprechender Kraftanwendung gegen das Gehäuse in oder gegen Fahrtrichtung aus der jeweiligen Normalstellung herausgebracht werden, indem der Raststift gegen die Wirkung seiner Federbelastung aus dem zugehörigen Sackloch herausgleitet. Das Gehäuse 1 kann dann relativ leicht an die Karosserie des Fahrzeugs herangeklappt werden, wobei lediglich die Reibung zwischen dem unteren Abschnitt 10 und der Lagerfläche 32 sowie der Leiste 22 in der Nut 60 überwunden werden muß. Da dieses Heranklappen üblicherweise einen Winkel von etwa 90° nicht übersteigt, bleibt die Leiste 22 in der Nut 60 eingefangen.

Es liegt im Rahmen der Erfindung, die winkelmäßige Länge der Nut 60 und der Leiste 22 und damit der Breite des Armes 20 größer als einen rechten Winkel zu machen. Ferner können an den beiden Enden der Nut 60 und/oder der Leiste 22 Anschläge vorgesehen sein, welche ein vollständiges seitliches heraustreten der Leiste 22 aus der Nut 60 verhindern.

Es liegt im Rahmen der Erfindung, in der Außenfläche der Leiste 22 nur ein einziges Sackloch 70 vorzusehen. Der beschriebene Außenspiegel kann dann auf jeweils eine von mehreren winkelmäßig verschiedenen Normalstellungen eingestellt werden, wenn in das Teil 62 mehrere winkelmäßig entsprechend versetzte Durchgangsbohrungen 64 eingebracht sind. Vor dem Anbau des Halters 54 an die Montageplatte 36 ist dann der Raststift 66 mit zugehöriger Feden in diejenige Durchgangsbohrung 64 einzubringen, die zusammen mit dem Sackloch 70 die für das betreffende Fahrzeug geeignete Raststellung und damit Normalstellung des Gehäuses 1 relativ zum Fuß 2 ergibt. Der Benutzer des Fahrzeugs findet an dem Außenspiegel dann genau ein, und zwar diejenige Raststellung des Gehäuses vor, die der zum Fahrzeugtyp passenden Normalstellung entspricht.

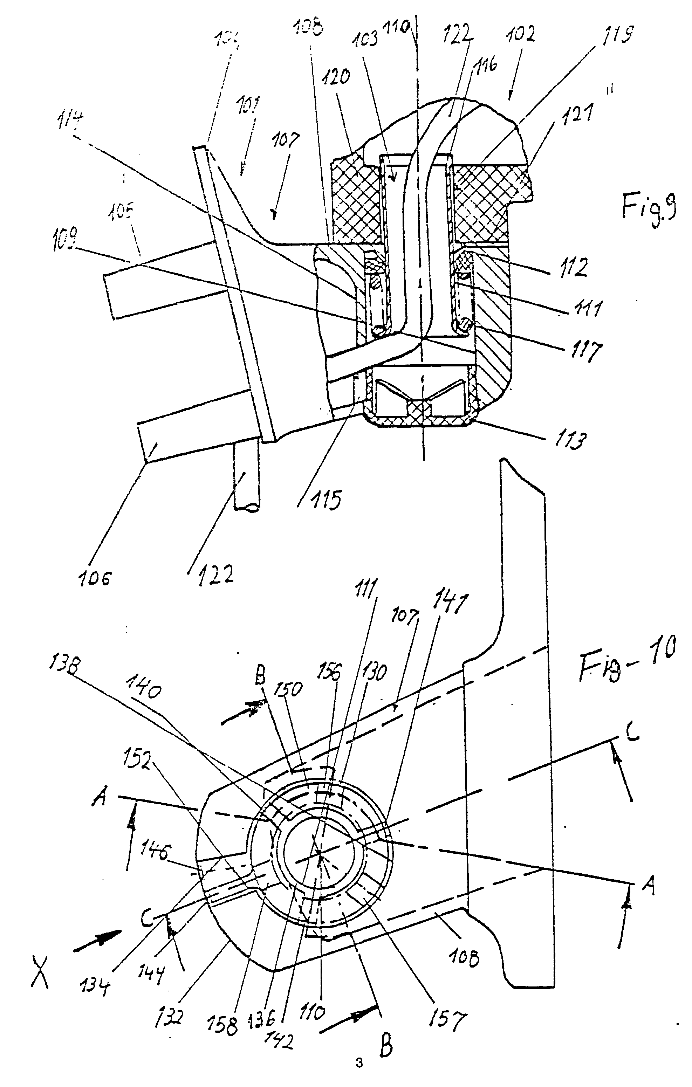

Der Außenspiegel nach Fig. 9 besteht aus einem Spiegelfuß 101 und einem Gehäuse 102, von welchem nur der ein Gelenk 103 umgebende Teil im Schnitt dargestellt ist. Der Spiegelfuß 101 besteht aus einer Platte 104, aus welcher Zapfen 105, 106 zur Befestigung an der nicht dargestellten Karosserie eines Fahrzeugs vorstehen, und aus einem von der Platte 104 abstehenden Fußteil 107, auf dessen im wesentlichen ebener Oberseite 108 das Gehäuse 102 befestigt ist. Das Fußteil 107 besitzt einen im Querschnitt runden Durchbruch 109, dessen Mittelachse 110 quer zur Oberseite 108 verläuft. Zur Oberseite 108 öffnet der Durchbruch 109 mit einer Bohrung 111, welche in den Durchbruch unter Bildung einer Ringschulter 112 übergeht. An dem der Oberseite gegenüberliegenden Ende des Fußteils 107 ist der Durchbruch mit einem Stopfen 113 nach außen verschlossen. Die der Platte 104 benachbarte Seitenwand 114 weist eine Öffnung 115 auf. Ein Rohrstück 116 ist in die Bohrung 111 eingepaßt und an beiden gegenüberliegenden Enden nach außen aufgeweitet, wobei eine in Richtung der Mittelachse 110 wirkende Feder 117 zwischen Ringschulter 112 und der Aufweitung des Rohrstücks 116 innerhalb des Durchbruchs 109 eingefangen ist. Das Rohrstück 116 erstreckt sich oberhalb der Oberseite 108 durch eine mit der Bohrung 111 fluchtende Gehäusebohrung 119 in dem dem Fußteil 107 benachbarten Abschnitt 120 des Gehäuses 102. Der Abschnitt 120 liegt mit seiner im wesentlichen ebenen Unterseite 121 auf der Oberseite 108 auf und wird auf diese vermöge der den Abschnitt 120 innen hintergreifenden Aufweitung des Rohrstücks 116 und der Feder 117 gedrückt. Außerdem ist das Gehäuse 102 um die Mittelachse 110, die mit der Achse des Rohrstücks 116 zusammenfällt, schwenkbar. Ein elektrisches Kabel 122 ist durch den Fuß 101, die Öffnung 115, und das Rohrstück 116 in das Gehäuse 102 hindurchgeführt und in nicht dargestellter Weise mit einer elektrisch arbeitenden Spiegelglas-Verstellvorrichtung im Gehäuse 102 verbunden. Die nachstehend beschriebenen Ausführungsformen der Erfindung erläutern jeweils eine in Fig. 9 nicht dargestellte Rastvorrichtung, die an dem Abschnitt 120 und der Oberseite 108 des Fußteils 107 ausgebildet ist. In den die einzelnen Ausführungsformen erläuternden Figuren sind Einzelheiten des Gelenks 103, wie etwa das Rohrstück 116 und die Feder 117 und der Stopfen 113 zur Verbesserung der Übersicht weggelassen worden.

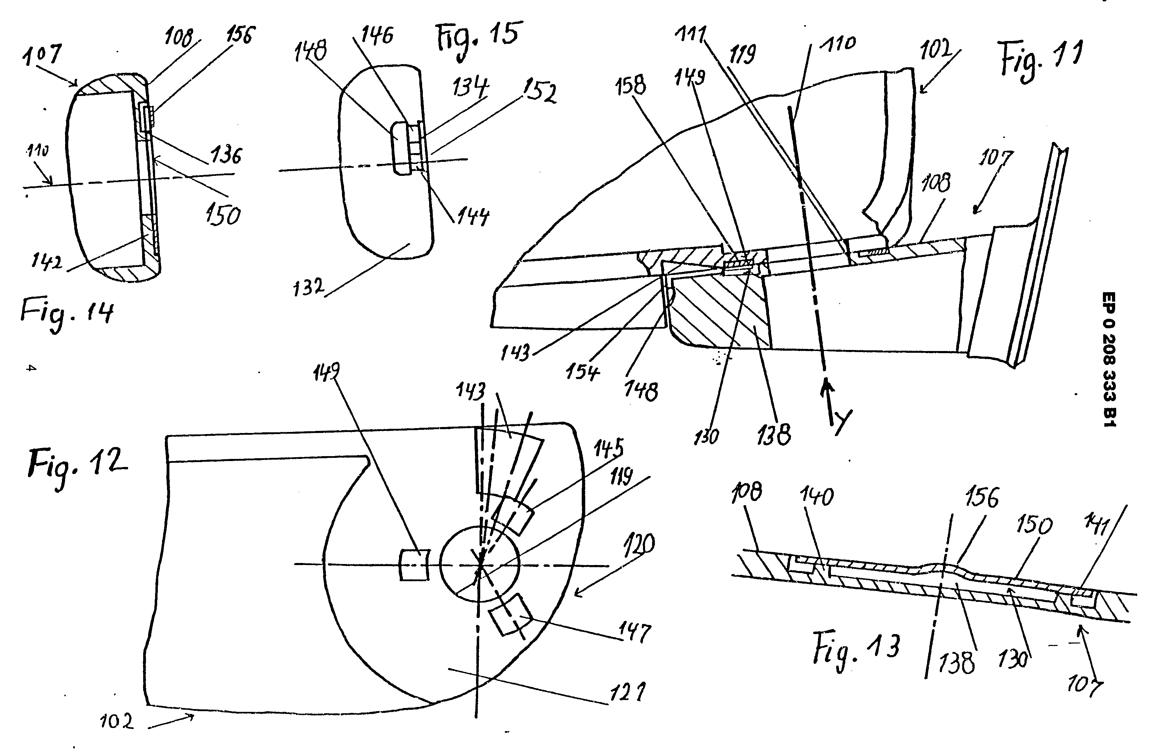

Eine erste Ausführungsform der Erfindung gemäß Figuren 10-15 weist in der in Figur 10 dargestellten Draufsicht auf das Fußteil 107 als Kontur eine flache, auf die Mittelachse 110 ausgerichtete, ringförmige Vertiefung 130 auf, welche zur Stirnseite 132 des Fußteils 107 durch einen Sektor 134 erweitert ist. Die Vertiefung 130 wird zur Bohrung 111 des Fußteils 107 von einem Ringsteg 136 begrenzt, dessen Oberfläche mit der Oberseite 108 in einer Ebene liegt. Vom Ringsteg 136 erstrecken sich bis zu der äußeren, die Vertiefung 130 peripher begrenzten Kante 138 im dargestellten Ausführungsbeispiel drei über den Boden der Vertiefung 130 sich erhebende Rippen 140, 141, 142, die um die Mittelachse 110 mit gleichen Abständen zueinander verteilt sind. In die Stirnseite 132 sind zwei Nuten 144, 146 eingeschnitten, unterhalb welcher eine Griffmulde 148 ausgebildet ist. Der Mittenabstand der beiden Nuten 144, 146 bezüglich der Mittelachse 110 ist das Bogenmaß eines Winkels, dessen Bedeutung nachher erläutert wird.

Das erste Rastelement hat in diesem ersten Ausführungsbeispiel die Form eines axial federnden Ringes 150 mit radial abstehender Fahne 152, deren freies Ende 154 zur Ebene des Ringes 150 rechtwinklig abgebogen ist. Wie insbesondere Fig. 10 zeigt, sind der Durchmesser und die Breite des Ringes 150 so bemessen, daß er mit nur wenig radialem Spiel in die Vertiefung 130 paßt und dort auf den Rippen 140, 141, 142 aufliegt. Die Rippen 140, 141, 142 erheben sich nur soweit über den Boden der Vertiefung 130, daß die ebenen Abschnitte der Oberfläche des Ringes 150 nicht über die Oberseite 108 vorstehen. Der Ring 150 kann so in die Vertiefung 130 eingelegt werden, daß seine Fahne 152 sich längs des Sektors 134 erstreckt und das freie Ende 154 von einer der beiden Nuten 144, 146 aufgenommen ist.

In den Ring 150 sind 3 gleich beabstandete, im Querschnitt V-förmige Erhebungen 156, 157, 158 an Stellen eingedrückt, von denen jede nahe der Mitte zwischen zwei benachbarten Rippen 140, 141, 142 sich befindet, wenn der Ring in die Vertiefung 130 in der erwähnten Weise eingelegt ist. Die Erhebungen 156, 157, 158 stehen dann über die 108 Oberseite axial vor.

Das zweite Rastelement hat bei diesem Ausführungsbeispiel die Form dreier rechtwinkliger, leicht bogenförmiger Einsenkungen 145, 147, 149, welche in die Unterseite 121 des Abschnitts 120 um die Gehäusebohrung 119 herum in solcher Winkellage bezüglich der Mittelachse 110 eingebracht sind, daß die Erhebungen 156, 157, 158 in die Einsenkungen 145, 147, 149 eingreifen, wenn der Ring 150 derart in der Vertiefung 130 eingelegt ist, daß das freie Ende 154 beispielsweise in die Nut 144 eintaucht. Somit haben die Mitten der Einsenkungen 145, 147, 149 von der Mittelachse 110 jeweils den gleichen radialen Abstand wie die Erhebungen 156, 157, 158 von dem Mittelpunkt des Ringes 150.

Zum Befestigen des Gehäuses 102 am Spiegelfuß 101 wird zunächst der Ring 150 in die Vertiefung 130 derart eingelegt, daß das freie Ende 154 beispielsweise in der Nut 144 eingefangen ist. Sodann wird ähnlich wie in Fig. 9 dargestellt ein Rohrstück 116 durch die Öffnung 115 und die Gehäusebohrung 119 gegebenenfalls unter Zwischenschaltung einer tellerförmigen Feder 117 hindurchgeführt und an den Enden so umgebördelt, daß die Unterseite 121 flächig auf der Oberseite 108 aufliegt. Die Erhebungen 156, 157, 158 greifen jetzt in die Einsenkungen 145, 147, 149 ein und bestimmen dadurch eine erste Normalstellung des Gehäuses 102 relativ zum Spiegelfuß 101, die etwa für den Anbau des Spiegels an die linke Karosserieseite eines rechts gelenktes Fahrzeugs geeignet ist. Zum Anklappen des Spiegelgehäuses an die Karosserie muß der in Richtung der Mittelachse 110 ausgeübte Federdruck des Rings 150 derart überwunden werden, daß die Einsenkungen 145, 147, 149 am Gehäuse 102 von den Erhebungen 156, 157, 158 freikommen. Danach läßt sich das Gehäuse 102 relativ zum Spiegelfuß um einen ausreichenden Winkel von beispielsweise 120° bewegen, wobei keine der Erhebungen 156, 157, 158 in eine der Einsenkungen 145, 147, 149 eingreift und die an die Erhebungen angrenzenden Ringabschnitte zwischen je zwei benachbarten Rippen 140, 141, 142 nach unten in die Vertiefung 130 elastisch ausweichen.

Wenn der fertig zusammengebaute Spiegel an ein links gelenktes Kraftfahrzeug links anmontiert werden soll, bei dem eine zweite Normalstellung vom Spiegelgehäuse relativ zum Spiegelfuß einzunehmen ist, wird das Gehäuse 102 aus seiner ersten Normalstellung soweit gegen die Fahrzeugkarosserie abgeklappt, daß das Ende 154 der Fahne 152 vom Gehäuse 102 nicht mehr verdeckt wird. Dann kann das Ende 154 aus der Nut 144 durch Anheben befreit und der Ring 150 soweit in Richtung des Uhrzeigers (Fig. 10) gedreht werden, bis das Ende 154 in die Nut 146 einfallen kann. Diese lagemäßige Verstellung des Ringes 150 um die Mittelachse 110 um den Winkel α hat zur Folge, daß die Erhebungen 156, 157, 158 sich um die Mittelachse 110 in ihrer Lage um α verdrehen, und damit die zweite Normalstellung des Spiegelgehäuses 102 definieren.

Die winkelmäßige Lageveränderung des Ringes 150 wird auch ohne vorheriges seitliches Abklappen des Gehäuses möglich, wenn die Unterseite 121 peripher außerhalb der Einsenkungen 145, 147, 149 gegenüber dem Sektor 134 eine Ausnehmung 143 aufweist, in welche die Fahne 152 durch Unterfassen des Endes 154 hinein angehoben werden kann. Wenn durch dieses Anheben das Ende 154 aus der Nut 144 befreit ist, wird durch Verdrehen des Gehäuses 102 um die Mittelachse 110 der Ring 150 vermöge des bleibenden Eingriffs der Erhebungen 156, 157, 158 in die Einsenkungen 145, 147, 149 mitgenommen, bis das Ende 154 in die Nut 146 einfällt und damit das Gehäuse die andere, zweite Normalstellung einnimmt.

An dieser Ausführungsform der Erfindung sind mehrere Variationen möglich. So kann der die Gehäusebohrung 119 umgebende Bereich des Abschnittes 120 ein metallischer Einsatz sein, der eine mit der Bohrung 119 fluchtende Zentralbohrung besitzt, an der Unterseite die Einsenkungen 145, 147, 149 aufweist und am äußeren Rand in dem Kunststoff des umgebenden Gehäuses verankert ist. Ferner ist es möglich, statt der dargestellten, um jeweils 120° zueinander winkelversetzten Rippen 140, 141, 142 eine größere Anzahl vor Rippen, beispielsweise 6 Rippen vorzusehen, die einerseits den behinderungslosen, winkelmäßigen Schwenkbereich des Gehäuses 102 relativ zum Spiegelfuß 101 herabsetzen und andererseits bei gleichem Federmaterial für den Ring 150 die Eingriffskraft der Erhebungen in die Einsenkungen vergrößern.

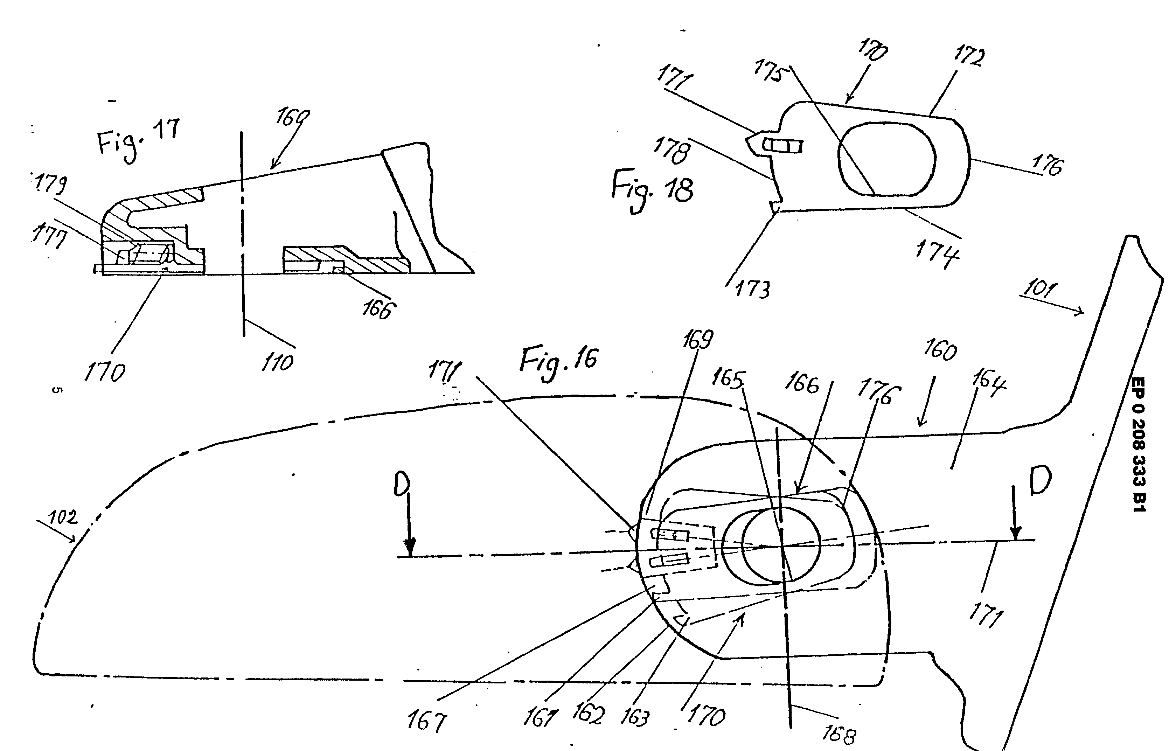

Bei der in Figuren 16-18 dargestellten zweiten Ausführungsform der Erfindung besteht das erste Rastelement aus einer Metallplatte 170, welche zwei gegenüberliegende, geradelinige Längskanten 172, 174, eine gebogene hintere Kante 176 und eine Vorderkante 178 aufweist, deren Krümmung derjenigen der halbkreisförmig gebogenen Stirnseite 162 eines Fußteils 160 des Spiegelfußes 101 angepaßt ist. Aus der Vorderkante steht eine nach außen spitz zulaufende Nase 171 sowie an einer Ecke der Vorderkante 178 ein Lappen 173 vor. Die Platte besitzt etwa in ihrer Mitte eine Öffnung 175 in Form eines abgeplatteten Kreises. Aus der Platte 170 ist nach unten ein Winkel 177 ausgestanzt, an dessen freiem Ende ein Ende einer Feder 179 gehalten ist, deren hinteres Ende sich an einer von der Stirnseite 162 zurückversetzten Fußteil-Innenfläche abstützt.

Die Oberseite 164 des Fußteils 160 besitzt eine etwa hantelförmige Vertiefung 166, deren geringste Breite auf einem sich quer zur Längsrichtung des Fußteils 160 erstreckenden Durchmesser 168 durch die für die Aufnahme des Rohrstücks 116 vorgesehene Öffnung 165 liegt. Wie Fig. 17 zeigt, ist die Vertiefung soweit in die Oberseite 164 eingebracht, daß die Platte 170 nicht mehr über die Oberseite vorsteht. Der die Vertiefung 166 zur Stirnseite 162 begrenzende Randsteg 167 besitzt einen ersten Auschnitt 169, der sich symmetrisch zu einem Durchmesser 171 durch die Öffnung 165 erstreckt, welcher in Längsrichtung des Fußteils 160 liegt. Die Breite des ersten Auschnitts 169 ist wenigstens gleich dem Winkel α zwischen der ersten und der zweiten Normalstellung, bezogen auf die Mittelachse 110, plus der Breite der Nase 171.

Der Randsteg 167 besitzt ein paar weitere Ausschnitte 161, 163, von denen jeder die Breite des Lappens 173 hat und die, bezogen auf die Mittelachse 110, um den Winkel versetzt sind. Wie Fig. 17 zeigt, hat der erste Ausschnitt 169 parallel zur Mittelachse 110 eine Tiefe, die größer ist als die Tiefe des übrigen Teils der Vertiefung 166 und dazu vorgesehen ist, die Feder 179 mit Winkel 177 zu beherbergen, wobei das dem Winkel 177 abgewandte Ende der Feder 179 sich an einer Innenschulter des Fußteils 60 derart abstützt, daß die Wirkrichtung der Feder 179 parallel zu der Längsrichtung der Platte 170 weist.

Das zweite Rastelement ist in dieser Ausführungsform der Erfindung nicht gesondert dargestellt, besteht jedoch aus einer nach innen spitz zulaufenden, kegeligen Blindbohrung in einer der Stirnseite 162 benachbarten Wange des Gehäuses 102 in einer Höhe, daß die Nase 171 in die Blindbohrung rastend eingreifen kann.

Wenn die Platte 170 mit Feder 179 in die Vertiefung 166 eingelegt ist, sucht die Feder 179 die Platte 170 in Richtung auf die Stirnseite 162 zu schieben, so daß die Platte 170 mit Teilen der Vorderkante 178 an der Innenfläche des Randsteges 167 mit Druck anliegt. Die Nase 171 steht dann mit Ihrer Spitze über die Stirnseite 162 in Richtung auf die erwähnte Wange des Gehäuses 102 soweit vor, daß die Nase mit Ihrer Spitze in dem ersten Rastelement eingefangen ist. Die Öffnung 175 in der Platte 170 ist so ausgebildet, daß sie die Öffnung 164 für das Rohrstück 116 frei läßt. Wenn das Gehäuse 102 abgeklappt werden soll, muß der bezüglich der Öffnung 165 radiale Druck der Feder 179 überwunden werden, so daß mit Freigabe der Nase 171 aus der Blindbohrung die Platte 170 zurückgeschoben wird, wozu die Größe der Öffnung 175 und der Freiraum zwischen hinterer Kante 176 und hinterer Begrenzung der Vertiefung 166 die Möglichkeit gibt. Wird nach Abklappen des Gehäuses 102 der lappen 173 von außen frei zugänglich, kann dieser aus der Ausnehmung 163 in die Ausnehmung 161 gelegt werden, wodurch sich die Platte 170 um die Mittelachse 110 um den Winkel α verdreht und die Nase 171 ihre Lage entsprechend verändert.

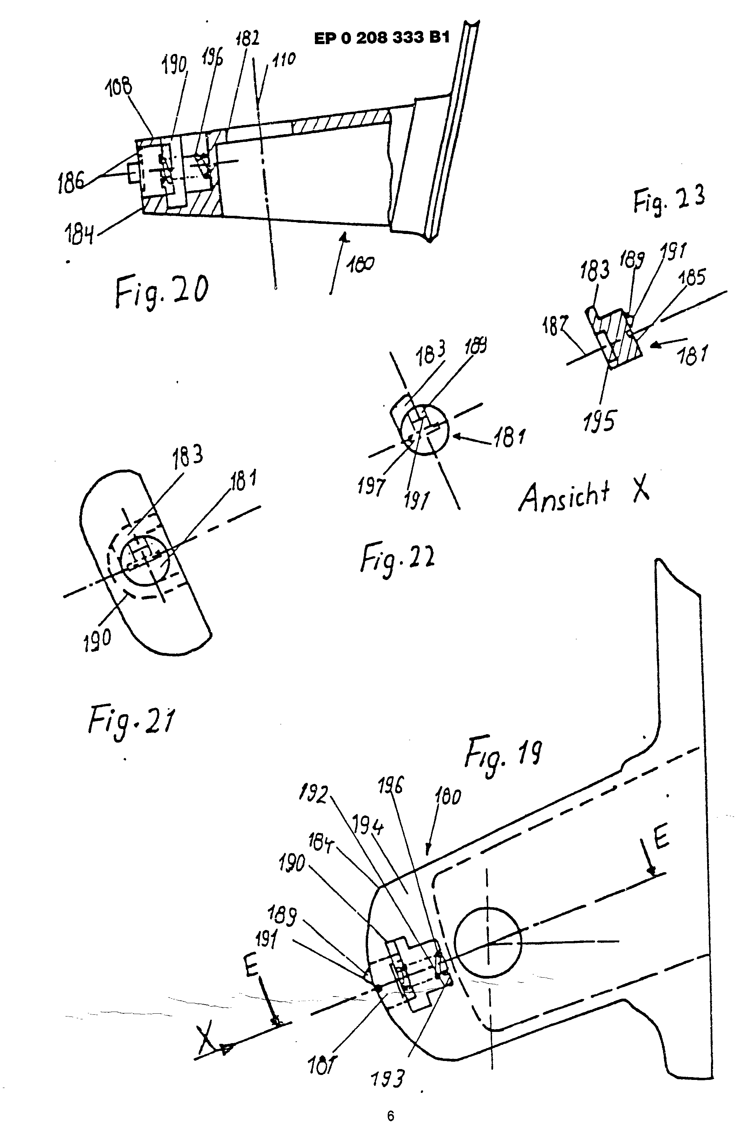

Ein weiteres Ausführungsbeispiel ist in den Figuren 19 bis 23 dargestellt. Das Fußteil 180 weist eine der Bohrung 111 entsprechende Bohrung 182 zur Aufnahme des Rohrstücks 116 auf. Von der Stirnseite 184 des Fußteils 180 her ist eine Bohrung 186 in Richtung auf die Mittelachse 110 eingebracht. Die Bohrung 186 besitzt einen in Figur 113 gestrichelt angedeuteten, kreisförmigen Hinterschnitt 190, der die Bohrung 186 radial erweitert und zur ebenen Oberseite 108 offen ist. In einer mit der Bohrung 186 fluchtenden, nach oben offenen Tasche 192, die in dem massiven Stirnteil 194 des Fußteils 180 eingebracht ist, ist eine Spiralfeder 196 beherbergt, welche sich an der Rückwand 193 der Tasche 192 abstützt und am vorderen Ende in einem Auschnitt 195 (Fig. 23) eines im wesentlichen zylindrischen Rastkörpers 181 gehalten ist.

Der Rastkörper 181 sitzt in der Bohrung 186, wobei eine vom Rastkörper 181 am hinteren Ende radial abstehende Zunge 183 in dem Hinterschnitt 190 eingefangen bleibt und ein Herausfallen des Rastkörpers 181 aus der Bohrung 186 unter der Wirkung der Feder 196 verhindert. Von der Stirnfläche 185 des Rastkörpers 181 steht auf einer Seite seiner Mittellinie 187 eine im Querschnitt V-förmige Nase 189 vor, welche gemäß Fig. 19 über die Stirnseite 184 des Fußteils 180 in Richtung auf die benachbarte Wange des nicht dargestellten Gehäuses hinausragt. In dieser Wange ist ein Blindloch von V-förmiger Gestalt eingebracht, in welches die Nase 189 zur Definition der ersten Normalstellung eingreift. Der Durchmesser des Rastkörpers 181 ist so gewählt, daß der Kamm 191 der Nase 189 mit der Mittellinie 187 die Hälfte des Winkels α bezüglich der Mittelachse 110 einschließt. In die Stirnfläche 185 ist eine Nut 197 eingebracht, in welche nach Abklappen des Gehäuses ein Schraubendreher eingeführt und mittels diesem der Rastkörper 181 um 180° um seine Mittellinie 187 gedreht werden kann. Die Nase 189 befindet sich dann auf der anderen Seite der Mittellinie 187 und definiert in dieser Stellung bei Eingriff in das Blindloch in der benachbarten Gehäusewange die zweite Normalstellung des Gehäuses relativ zum Fußteil 180.

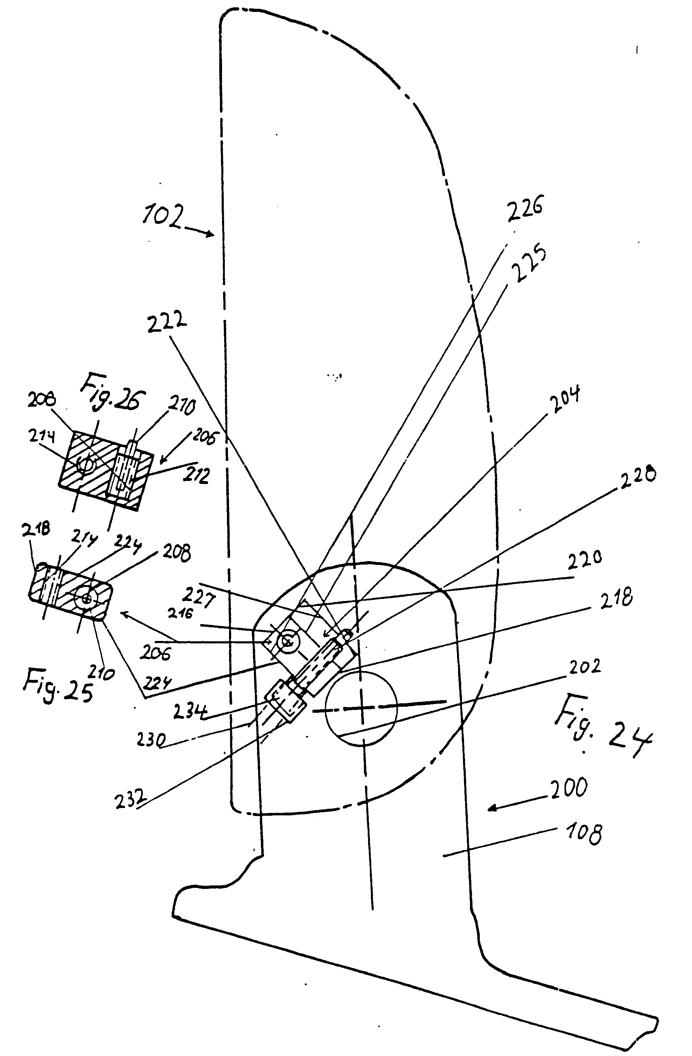

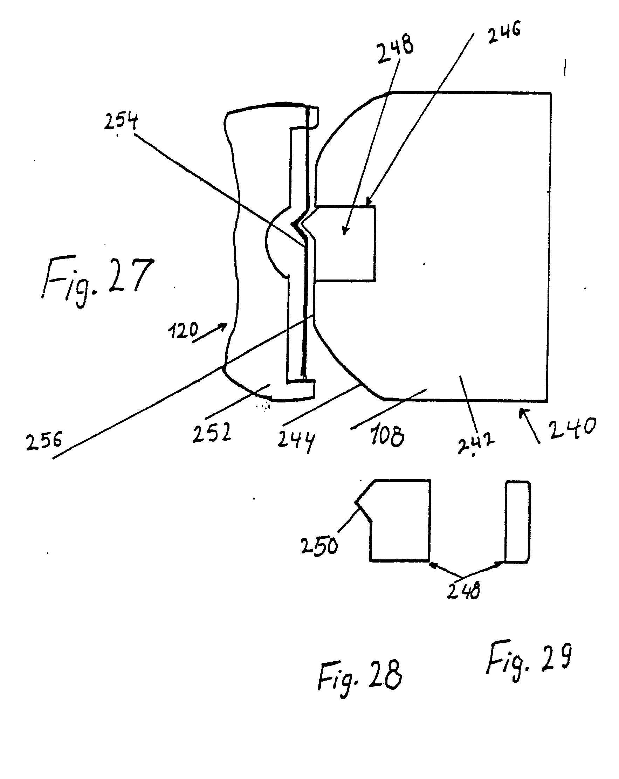

Eine weitere Ausführungsform der Erfindung ist in den Figuren 24-26 erläutert, wobei in Fig. 24 das Gehäuse 102 in einer der Normalstellungen strichpunktiert eingetragen ist. In dem Fußteil 200 ist neben der Bohrung 202, die das Rohrstück 116 aufnimmt, eine rechtwinklige Vertiefung 204 ausgebildet. Ein quaderförmiger Rastkörper 206 ist mit einem abgestsuften Sackloch 208 versehen, in welchem ein Stift 210 sowie eine den Stift beaufschlagende Druckfeder 212 untergebracht sind. Der Stift 210 stellt das erste Rastelement dar und kann durch entsprechende Krafteinwirkung von außen gegen die Wirkung der Druckfeder 212 ganz in das Sackloch 208 eintauchen. In seiner vorderen Stellung ragt der Stift 210 aus dem Sachloch 208 hervor (Fig. 26). Neben dem Sackloch 208 ist quer zu dessen Längsachse eine Gewindebohrung 214 durch den Rastkörper 206 getrieben. Der Rastkörper 206 paßt derart in die Vertiefung 204, daß zwei gegenüberliegende, freie Seitenflächen 216, 218 an zwei gegenüberliegenden Randflächen 220, 222 der Vertiefung 204 flächig anliegen und der Rastkörper 206 über die Oberseite 108 des Fußteils 200 nicht vorsteht. In der in Fig. 24 dargestellten einen Endlage des Rastkörpers 206 in der Vertiefung 204 liegt eine die Seitenflächen 216, 218 verbindende Seitenfläche 224, welche von der Gewindebohrung 214 durchdrungen ist, an einer Randfläche 226 der Vertiefung 204 flächig an. Der Rastkörper 206 kann durch Drehen einer in die Gewindebohrung 214 eingedrehte Schraube 228 in eine zweite Endlage innerhalb der Vertiefung 204 verschoben werden, bei der die der Seitenfläche 224 gegenüberliegende Seitenfläche 225 des Rastkörpers 206 an der der Randfläche 226 gegenüberliegende Randfläche 227 der Vertiefung 204 flächig anliegt. Die Schraube 228 ist in einer Bohrung 230 drehbar gehalten, die mit der Gewindebohrung 214 fluchtet, wenn der Rastkörper 206, wie dargestellt, in die Vertiefung 204 eingesetzt ist. Die Bohrung 230 besitzt eine Erweiterung 232, in welcher der Kopf 234 der Schraube 228 so gehalten ist, daß die Schraube 228 paraktisch nicht längs verschieblich ist. Der Kopf 234 ist durch die Bohrung 230 von außen zugänglich. Zum Einsetzen der Schraube 228 in das Fußteil 200 ist die Erweiterung 232 und der die Erweiterung 232 mit der Vertiefung 204 verbindende Teil der Bohrung 230 zur Oberseite 108 offen.

Die beiden erwähnten Endlagen des Rastkörpers 206 in der Vertiefung 204 sind soweit von einander entfernt, daß die Mitte des Stiftes 210 die erste Normalstellung des Gehäuses 102 relativ zum Fußteil 200 in der einen Endlage des Rastkörpers und die zweite Normalstellung in der anderen Endlage des Rastkörpers 206 definiert. In der Unterseite 121 des Abschnittes 120 ist eine Blindbohrung vorgesehen, in welche das aus dem Sackloch 208 vorstehende Ende des Stiftes 210 einrasten kann.

Eine besonders einfache Ausführungform der Erfindung ist schließlich in den Figuren 27-29 dargestellt. In das massive Stirnteil 242 des Fußteils 240 ist eine zur Stirnseite 244 und zur Oberseite 108 offene, rechtwinklige Vertiefung 246 eingebracht, in welcher ein im wesentlichen quaderförmiger Rastkörper 248 formschlüssig derart aufgenommen ist, daß der Rastkörper 248 über die Oberseite 108 nicht vorsteht, jedoch eine aus einer Seitenfläche vorstehende Nase 250 des Rastkörpers 248 aus der Stirnseite 244 in Richtung auf die benachbarte Wange 252 des Gehäuses 102 vorsteht. In der Wange 252 ist eine langgestreckte Blattfeder 256 gehalten, welche mit einer V-förmigen Einbuchtung 254 versehen ist. Die Einbuchtung 254 ist förmlich an die Form der Nase 250 angepaßt, so daß eine erste Normalstellung durch Eingriff der Nase 250 in die Einbuchtung 254 definiert ist. Beim Abklappen des Gehäuses 102 kann in dieser Ausführungsform der Erfindung die Blattfeder 256 vom Fußteil 240 weg ausweichen und die Nase 250 aus der Einbuchtung 254 frei geben.

Da die Nase 150 asymmetrisch zur Mittelinie des Rastkörpers 248 ausgebildet ist, kann dieser nach Abklappen des Gehäuses 102 aus der Vertiefung 246 von Hand herausgenommen und um 180 gedreht und wieder in die Vertiefung 246 eingesetzt werden, so daß die Nase 250 dann bezüglich der in Fig. 27 nicht dargestellten Mittelachse 110 winkelmäßig versetzt ist und die zweite Normalstellung durch Eingriff in die Einbuchtung 254 definiert ist.

Diese Ausführungsform der Erfindung kann in der Weise abgewandelt werden, daß die Einbuchtung 254 asymmetrisch zur Mitte der Blattfeder 256 ausgebildet und die Blattfeder 256 so in dem Abschnitt 120 des Gehäuses gehalten ist, daß sie von außen in eine um 180° gedrehte Lage gebracht werden kann, so daß nach einer derartigen drehung die Einbuchtung 254 bezüglich der Mittelachse 10 um den Winkel versetzt ist. Bei dieser Ausgestaltung der Erfindung genügt es, wenn die Nase 250 fest in das Fußteil 242 integriert ist, so daß der Rastkörper 248 samt Vertiefung 246 entbehrlich sind.

Weiterhin liegt es im Rahmen der Erfindung, den Ring 150 aus unnachgiebigem Material zu fertigen, so daß dann der Eingriff der Erhebungen 156, 157, 158 aus den Einsenkungen 145, 147, 149 durch Überwinden der von der Feder 17 ausgeübten Axialkraft zum Umklappen des Gehäuses gelöst werden kann. In diesem Sinn kann der Stift 210 fest mit dem Rastkörper 106 verbunden sein, so daß das Sackloch 208 und Feder 212 entbehrlich werden, wenn eine Feder 17 am Gelenk 103 vorhanden ist.

**Patentansprüche**

1. Fahrzeugaußenspiegel mit einem Fuß (2, 101), an welchem ein ein Spiegelglas (5) tragendes Gehäuse (1, 102) um die Achse (14, 110) eines Rohrstücks (50, 116) schwenkbar befestigt ist, sowie mit einer zwei Rastelemente aufweisenden Rastvorrichtung, welche an einem Fußteil und an einem dem Fußteil benachbarten Abschnitt des Gehäuses (120) ausgebildet ist und durch gegen Federdruck lösbaren Formenschluß der Rastelemente eine erste Normalstellung des Gehäuses relativ zum Fuß definiert, dadurch gekennzeichnet, daß eines der beiden Rastelemente (66 ; 156, 157, 158 ; 171 ; 189 ; 210 ; 250 ; sowie 70 ; 145 ; 147, 149 ; 254) in einer Kontur (64 ; 130 ; 166 ; 186, 190 ; 204 ; 246 ; 252) des Fußteils (62 ; 107, 160, 180, 200, 240) oder des Abschnittes des Gehäuses (120, Fig. 26) in einer von zwei um die Achse (14, 110) winkelmäßig versetzten Lagen, welche die erste und eine zweite Normalstellung des Gehäuses (1 ; 102) definieren, eingefangen und von außen lageversetzbar ist.

2. Spiegel nach Anspruch 1, dadurch gekennzeichnet, daß ein von dem Gehäuse (1) an einem dem unteren Abschnitt (10) gegenüberliegenden oberen Abschnitt (16) radial abstehender Arm (20) in einer am Fuß (2) ausgebildete, auf die Achse (14) zentrierte Kulisse (60) eingreift, wobei die Rastvorrichtung (66, 70, 72) zwischen dem Arm (20) und der Kulisse (60) ausgebildet ist.

3. Spiegel nach Anspruch 2, dadurch gekennzeichnet, daß die Kulisse (60) an einem Halter (54) ausgebildet it, der gegenüber dem Arm (20) von einer Montageplatte (36) des Fußes (2) absteht.

4. Spiegel nach Anspruch 2 oder 3, dadurch gekennzeichnet, daß der Halter (54) lösbar an der Montageplatte (36) befestigt ist.

5. Spiegel nach einem der Ansprüche 2-4, dadurch gekennzeichet, daß die Kulisse (60) aus einer bogenförmigen, auf die Achse (14) zentrierten Nut besteht, und daß der Arm eine bogenförmige Leiste (22) zum Eingriff in die Nut aufweist.

6. Spiegel nach Anspruch 5, dadurch gekennzeichnet, daß die Leiste (22) kreisbogenförmig gestaltet ist.

7. Spiegel nach einem der Ansprüche 2-6, dadurch gekennzeichnet, daß in die Außenperipherie der Leiste wenigstens ein Sackloch (70) eingebracht ist, und daß in der fußseitigen Wange (62) wenigstens eine Bohrung (64) vorgesehen ist, in der ein axial nachgiebiger Raststift (66) zum Eingriff in das Sackloch gehalten ist.

8. Spiegel nach einem der Ansprüche 2-7, dadurch gekennzeichnet, daß in der Wange (62) mehrere Bohrungen (64) zum wahlweisen Einsatz eines Raststiftes (66) und in der Außenperipherie des Steges (22) ein einziges Sackloch (70) angebracht ist.

9. Spiegel nach einem der vorstehenden Ansprüche, dadurch gekennzeichnet, daß eines der beiden Rastelemente in Richtung auf das andere Rastelement federbelastet ist.

10. Spiegel nach Anspruch 9, dadurch gekennzeichnet, daß eines der beiden Rastelemente eine Blattfeder (150, 254) aufweist.

11. Spiegel nach einem der Ansprüche 1, 9, 10, dadurch gekennzeichnet, daß das erste der beiden Rastelemente eine zylindrische oder V-förmige Nase und das zweite Rastelement eine der Nase formlich angepaßte, zylindrische oder V-förmige Einsenkung aufweist.

12. Spiegel nach Anspruch 11, dadurch gekennzeichnet, daß die Einsenkung in dem Abschnitt ausgebildet ist, und die Nase aus dem Fußteil vorsteht.

13. Spiegel nach Anspruch 12, dadurch gekennzeichnet, daß die Nase an einem Rastkörper (181, 206, 248) ausgebildet ist, der in der Kontur beherbergt ist.

14. Spiegel nach einem der Ansprüche 1, 9-13, dadurch gekennzeichnet, daß ein Ring (150) in einer das Rohrstück (116) umgebenden, ringförmigen Vertiefung (130) auf winkelmäßig gleich beabstandeten Rippen (140, 141, 142) beherbergt ist und winkelmäßig gleich beabstandte Erhebungen (156, 157, 158) aufweist, von denen jede zwischen je einem Paar von Rippen sitzt, und daß der Ring (150) mit einer von außen zugänglichen Fahne (152) versehen it, welche in einer von zwei winkelmäßig um die Achse (110) versetzten, am Fußteil (107) ausgebildete Nuten (144, 146) einfügbar ist und daß in dem Abschnitt die Erhebungen aufnehmende Einsenkungen (145, 147, 149) ausgebildet sind.

15. Spiegel nach Anspruch 14, dadurch gekennzeichnet, daß der Ring (150) aus axial federndem Material besteht.

16. Spiegel nach Anspruch 14 oder 15, dadurch gekennzeichnet, daß der Ring (150) drei winkelmäßig um die Achse (110) gleich beabstandete Erhebungen (156, 157, 158) aufweist.

17. Spiegel nach einem der Ansprüche 14-15, dadurch gekennzeichnet, daß der Ring (150) sechs winkelmäßig um die Achse (110) gleich beabstandete Erhebungen aufweist, und daß in der Vertiefung (130) sechs sich radial erstreckende Rippen ausgebildet sind, wobei je eine Rippe zwischen je zwei benachbarten Erhebungen liegt.

18. Spiegel nach einem der Ansprüche 14-17, dadurch gekennzeichnet, daß der Abschnitt (120) einen metallischen Einsatz aufweist, in welchem die Einsenkungen ausgebildet sind.

19. Spiegel nach einem der Ansprüche 1, 9-13, dadurch gekennzeichnet, daß in einer hantelförmigen Vertiefung (166) eine mit Langloch (175) versehene Platte (170) aufgenommen ist, von der an einer Stirnseite (178) eine über die Stirnseite (162) des Fußteils (160) vorstehende Nase (171) sowie ein Lappen (173) vorstehen, und daß die Vertiefung zu zwei winkelmäßig um die Achse (110) versetzten Ausnehmungen (161, 163) aus dem Fußteil (160) verlängert ist, in welche der Lappen (173) einsetzbar ist.

20. Spiegel nach Anspruch 19, dadurch gekennzeichnet, daß die Platte mit einer sich am Fußteil abstützenden Feder (179) versehen ist.

21. Spiegel nach einem der Ansprüche 1, 9-13, dadurch gekennzeichnet, daß in die Stirnseite (184) des Fußteils (180) eine Bohrung (186) eingebracht ist, in welcher ein im wesentlichen zylindrischer Rastkörper (181) durch eine sich am Fußteil abstützende Feder (196) und eine vom Rastkörper (181) radial abstehende, in einen Hinterschnitt (190) der Bohrung (196) eingreifende Zunge (183) gehalten ist, wobei der Rastkörper (181) eine an seiner Stirnfläche (185) asymmetrisch ausgebildete Nase (189) aufweist, die aus der Stirnseite (184) des Fußteils (180) nach außen vorsteht, wobei in der benachbarten Wange des Gehäuses (102) ein der Nase (189) angepaßtes Sackloch ausgebildet ist.

22. Spiegel nach Anspruch 21, dadurch gekennzeichnet, daß der Rastkörper (181) von außen in der Bohrung (186) drehbar ist.

23. Spiegel nach einem der Ansprüche 1, 9-13, dadurch gekennzeichnet, daß in einer Vertiefung (204) des Fußteils (200) ein im wesentlichen quaderförmiger Rastkörper (206) verschiebbar gehalten ist, welcher einen zweckmäßig federbelasteten, über die Oberseite (108) des Fußteils (200) vorstehenden Raststift (210) aufweist.

24. Spiegel nach Anspruch 23, dadurch gekennzeichnet, daß der Rastkörper (206) von einer im Fußteil (200) im wesentlichen unverschiebbar gehaltenen Gewindeschraube (228) gehalten und in der Vertiefung (204) zwischen zwei Endlagen verschiebbar ist.

25. Spiegel nach einem der Ansprüche 1, 9-13, dadurch gekennzeichnet, daß in einer rechtwinkligen Vertiefung (246) ein quaderförmiger Rastkörper (248) formschlüssig und von außen aus der Vertiefung (246) entnehmbar gehalten ist, wobei aus der Stirnfläche des Rastkörpers (248) eine Nase (250) nach außen vorsteht, und daß die benachbarte Wange (252) des Gehäuses (102) eine mit einer Einbuchtung (254) versehene Blattfeder aufweist.

## Claims

1. A vehicle outside mirror comprising a base (2, 101) on which a housing (1, 102) carrying a mirror glass (5) is fixed pivotably about the axis (14, 110) of a tubular portion (50, 116), and a locking device which has two locking elements and which is provided on a base portion and on a section of the housing (120) adjacent the base portion and which defines a first normal position of the housing relative to the base by positive locking, which is releasable against spring pressure, of the locking elements, characterised in that one of the two locking elements (66 ; 156, 157, 158 ; 171, 189 ; 210 ; 250 ; and 70 ; 145, 147, 149 ; 254) is engaged in a contour (64 ; 130 ; 166 ; 186 ; 190 ; 204 ; 246 ; 252) of the base portion (62 ; 107, 160, 180, 200, 240) or the section of the housing (120, Figure 26) in one of two positions which are angularly displaced around the axis (14, 110) and which define the first and a second normal position of the housing (1 ; 102), and is displaceable in position from the outside.

2. A mirror according to claim 1 characterised in that an arm (20) which projects radially from the housing (1) on an upper section (16) which is in opposite relationship to the lower section (10) engages into a slot (60) which is provided on the base (2) and which is centered on the axis (14), the locking device (66, 70, 72) being provided between the arm (20) and the slot (60).

3. A mirror according to claim 2 characterised in that the slot (60) is provided on a holder (54) which projects opposite the arm (20) from a mounting plate (36) of the base (2).

4. A mirror according to claim 2 or claim 3 characterised in that the holder (54) is releasably secured to the mounting plate (36).

5. A mirror according to one of claims 2 to 4 characterised in that the slot (60) comprises an arcuate slot which is centered on the axis (14) and that the arm has an arcuate bar portion (22) for engagement into the slot.

6. A mirror according to claim 5 characterised in that the bar portion (22) is in the form of a circular arc.

7. A mirror according to one of claims 2 to 6 characterised in that at least one blind hole (70) is provided in the outside periphery of the bar portion and that provided in the side wall portion (62) on the base side is at least one bore (64) in which an axially yielding locking pin (66) for engagement into the blind hole is held.

8. A mirror according to one of claims 2 to 7 characterised in that a plurality of bores (64) for selective insertion of a locking pin (66) are provided in the side wall portion (62) and a single blind hole (70) is provided in the outside periphery of the limb portion (22).

9. A mirror according to one of the preceding claims characterised in that one of the two locking elements is spring-loaded towards the other locking element.

10. A mirror according to claim 9 characterised in that one of the two locking elements has a blade spring (150, 254).

11. A mirror according to one of claims 1, 9 and 10 characterised in that the first of the two locking elements has a cylindrical or V-shaped nose and the second locking element has a cylindrical or V-shaped recess which is adapted to the shape of the nose.

12. A mirror according to claim 11 characterised in that the recess is provided in the section and the nose projects out of the base portion.

13. A mirror according to claim 12 characterised in that the nose is formed on a locking member (181, 206, 248) which is disposed within the contour.

14. A mirror according to one of claims 1 and 9 to 13 characterised in that a ring (150) is disposed in an annular depression (130) extending around the tubular portion (116), on equally angularly spaced ribs (140, 141, 142), and has angularly equally spaced raised portions (156, 157, 158), each of which is disposed between a respective pair of ribs, and that the ring (150) is provided with a lug (152) which is accessible from the exterior and which can be inserted into one of two grooves (144, 146) which are angularly displaced around the axis (110) and which are provided on the base portion (107), and that recesses (145, 147, 149) for accommodating the raised portions are provided in the section.

15. A mirror according to claim 14 characterised in that the ring (150) comprises axially resilient material.

16. A mirror according to claim 14 or claim 15 characterised in that the ring (150) has three raised portions (156, 157, 158) which are angularly equally spaced around the axis (110).

17. A mirror according to one of claims 14 and 15 characterised in that the ring (150) has six raised portions which are angularly equally spaced around the axis (110) and that six radially extending ribs are provided in the depression (130), a respective rib being disposed between two respective adjacent raised portions.

18. A mirror according to one of claims 14 to 17 characterised in that the section (120) has a metal insert in which the recesses are formed.

19. A mirror according to one of claims 1 and 9 to 13 characterised in that accommodated in a dumbbell-shaped depression (166) is a plate (170) which is provided with a slot (175) and from which project, at one end (178), a nose (171) projecting beyond the end (162) of the base portion (160), and a tang (173), and that the depression is extended to provide two openings (161, 163) in the base portion (160), which are angularly displaced around the axis (110) and into which the tang (173) can be inserted.

20. A mirror according to claim 19 characterised in that the plate is provided with a spring (179) supported against the base portion.

21. A mirror according to one of claims 1 and 9 to 13 characterised in that provided in the end (184) on the base portion (180) is a bore (186) in which a substantially cylindrical locking member (181) is held by a spring (196) which is supported against the base portion and a tongue (183) which projects radially from the locking member (181) and which engages into an undercut configuration (190) of the bore (196), wherein the locking member (181) has a nose (189) which is formed asymmetrically at its end face (185) and which projects out of the end (184) of the base portion (180), wherein a blind hole which is adapted to the nose (189) is provided in the adjacent side wall portion of the housing (102).

22. A mirror according to claim 21 characterised in that the locking member (181) is rotatable in the bore (186) from the outside.

23. A mirror according to one of claims 1 and 9 to 13 characterised in that a substantially parallelepipedic locking member (206) is held displaceably in a depression (204) in the base portion (200), the locking member having an advantageously spring-loaded locking pin (210) which projects beyond the top side (108) of the base portion (200).

24. A mirror according to claim 23 characterised in that the locking member (206) is held by a screwthreaded screw (228) which is held substantially non-displaceably in the base portion (200) and is displaceable in the depression (204) between two limit positions.

25. A mirror according to one of claims 1 and 9 to 13 characterised in that a parallelepipedic locking member (248) is held positively in a rectangular depression (246) in such a way that it can be removed from the depression (246) from the outside, wherein a nose (250) projects outwardly from the end face of the locking member (248), and that the adjacent side wall portion (252) of the housing (102) has a blade spring provided with a notch (254).

## Revendications

1. Rétroviseur extérieur de véhicule avec un pied (2, 101) sur lequel un boîtier (1, 102) supportant un verre réfléchissant (5) est fixé de manière pivotante autour de l'axe (14, 110) d'un élément tubulaire (50, 116), ainsi qu'avec un dispositif encliquetable qui comporte deux éléments encliquetables et qui est conçu sur une pièce de pied et sur une portion du boîtier (120) voisine de la pièce de pied et définit, par un accouplement des éléments encliquetables, amovible à l'encontre d'une pression élastique, une première position normale du boîtier par rapport au pied, caractérisé en ce que l'un des deux éléments encliquetables (66 ; 156, 157, 158 ; 171 ; 189 ; 210 ; 250 ; ainsi que 70 ; 145, 147, 149 ; 254) est immobilisé, dans un contour (64 ; 130 ; 166 ; 186, 190 ; 204 ; 246 ; 252) de la pièce de pied (62 ; 107, 160, 180, 200, 240) ou de la portion du boîtier (120, Fig. 26), dans une des deux positions qui sont décalées de manière angulaire autour de l'axe (14, 110) et qui définissent la première et une seconde position normale du boîtier (1 ; 102), et que sa position peut être réglée de l'extérieur.

2. Rétroviseur conforme à la revendication 1, caractérisé en ce qu'un bras (20) dépassant radialement du boîtier (1) sur une portion supérieure (16) opposée à la portion inférieure (10) s'engage dans une coulisse (60) conçue sur le pied (2) et centrée sur l'axe (14), le dispositif encliquetable (66, 70, 72) étant réalisé entre le bras (20) et la coulisse (60).

3. Rétroviseur conforme à la revendication 2, caractérisé en ce que la coulisse (60) est réalisée sur un support (54) qui dépasse d'une plaque de montage (36) du pied (2) en face du bras (20).

4. Rétroviseur conforme à la revendication 2 ou 3, caractérisé en ce que le support (54) est monté de façon amovible sur la plaque de montage (36).

5. Rétroviseur conforme à l'une des revendications 2 à 4, caractérisé en ce que la coulisse (60) est constituée d'une gorge en forme d'arc, centrée sur l'axe (14), et en ce que le bras comporte une barrette (22) en forme d'arc pouvant s'engager dans la gorge.

6. Rétroviseur conforme à la revendication 5, caractérisé en ce que la barrette (22) est en forme d'arc de cercle.

7. Rétroviseur conforme à l'une des revendications 2 à 6, caractérisé en ce que, dans la périphérie extérieure de la barrette, est pratiqué au moins un trou borgne (70), et en ce que, dans la face côté pied (62), est prévu au moins un perçage (64) dans lequel une broche encliquetable déformable axialement (66) est maintenue pour s'engager dans le trou borgne.

8. Rétroviseur conforme à l'une des revendications 2 à 7, caractérisé en ce que plusieurs perçages (64) sont pratiqués dans la face (62) pour y engager sélectivement une broche encliquetable (66) et un seul trou borgne (70) est pratiqué à la périphérie extérieure de la barrette (22).

9. Rétroviseur conforme à l'une des revendications précédentes, caractérisé en ce que l'un des deux éléments encliquetables est sollicité élastiquement en direction de l'autre élément encliquetable.

10. Rétroviseur conforme à la revendication 9, caractérisé en ce que l'un des deux éléments encliquetables comporte un ressort à lame (150, 254).

11. Rétroviseur conforme à l'une des revendications 1, 9, 10, caractérisé en ce que le premier des deux éléments encliquetables comporte un nez cylindrique ou en forme de V et le second élément encliquetable comporte un renfoncement cylindrique ou en forme de V dont la forme est adaptée au nez.

12. Rétroviseur conforme à la revendication 11, caractérisé en ce que le renfoncement est réalisé dans la portion, et le nez dépasse de la pièce de pied.

13. Rétroviseur conforme à la revendication 12, caractérisé en ce que le nez est réalisé sur un corps encliquetable (181, 206, 248) qui est logé dans le contour.

14. Rétroviseur conforme à l'une des revendications 1, 9 à 13, caractérisé en ce qu'un anneau (150) est logé dans un creux annulaire (130), entourant l'élément tubulaire (116), sur des ailettes disposées à égale distance angulaire (140, 141, 142) et comporte des bosses disposées à égale distance angulaire (156, 157, 158) dont chacune est placée entre une paire d'ailettes, et en ce que l'anneau (150) est muni d'un talon accessible de l'extérieur (152) qui peut être introduit dans l'une des deux gorges (144, 146) décalées de manière angulaire autour de l'axe (110) et formées sur la pièce de pied (107), et en ce que les renfoncements recevant les bosses (145, 147, 149) sont réalisés dans la portion.

15. Rétroviseur conforme à la revendication 14, caractérisé en ce que l'anneau (150) est réalisé en matériau élastique axialement.

16. Rétroviseur conforme à la revendication 14 ou 15, caractérisé en ce que l'anneau (150) comporte trois bosses (156, 157, 158) réparties à égale distance angulaire autour de l'axe (110).

17. Rétroviseur conforme à l'une des revendications 14 et 15, caractérisé en ce que l'anneau (150) comporte six bosses réparties à égale distance angulaire autour de l'axe (110), et en ce que, dans le creux (130), sont formées six ailettes s'étendant radialement, chaque ailette étant disposée entre deux bosses voisines.

18. Rétroviseur conforme à l'une des revendications 14 à 17, caractérisé en ce que la portion (120) comporte un élément métallique dans lequel sont formés les renfoncements.

19. Rétroviseur conforme à l'une des revendications 1, 9 à 13, caractérisé en ce que, dans un creux en forme d'haltère (166), est logée une plaque (170) qui est munie d'un trou longitudinal (175) et de laquelle dépassent, sur une partie avant (178), un nez faisant saillie sur la partie avant (162) de la pièce de pied (160) ainsi qu'une patte (173), et en ce que le creux est prolongé par deux évidements (161, 163) de la pièce de pied (160), qui sont décalés de manière angulaire par rapport à l'axe (110) et dans lesquels peut s'engager la patte (173).

20. Rétroviseur conforme à la revendication 19, caractérisé en ce que la plaque est munie d'un ressort (179) prenant appui sur la pièce de pied.

21. Rétroviseur conforme à l'une des revendications 1, 9 à 13, caractérisé en ce que, dans la partie avant (184) de la pièce de pied (180), est pratiqué un perçage (186) dans lequel un corps encliquetable essentiellement cylindrique (181) est maintenu par un ressort (196) prenant appui sur la pièce de pied et par une languette (183) dépassant du corps encliquetable (181) et s'engageant dans un cran (190) de perçage (186), le corps encliquetable (181) comportant, sur sa surface avant (185) un nez de forme asymétrique (189) qui fait saillie vers l'extérieur sur la partie avant (184) de la pièce de pied (180), un trou borgne adapté au nez (189) étant réalisé dans la face voisine du boîtier (102).

22. Rétroviseur conforme à la revendication 21, caractérisé en ce que le corps encliquetable (181) peut être tourné de l'extérieur dans le perçage (186).

23. Rétroviseur conforme à l'une des revendications 1, 9 à 13, caractérisé en ce que, dans un creux (204) de la pièce de pied (200), est maintenu, de manière coulissante, un corps encliquetable de forme sensiblement parallélépipédique (206) qui comporte une broche encliquetable (210) sollicitée élastiquement de manière appropriée et dépassant de la partie supérieure (108) de la pièce de pied (200).

24. Rétroviseur conforme à la revendication 23, caractérisé en ce que le corps encliquetable (206) est retenu par une vis filetée (228) maintenue de manière essentiellement non coulissante dans la pièce de pied (200) et peut coulisser dans le creux (204) entre deux positions extrêmes.

25. Rétroviseur conforme à l'une des revendications 1, 9 à 13, caractérisé en ce que, dans un creux rectangulaire (246), un corps encliquetable de forme parallélépipédique (248) est retenu de manière solidaire et peut être retiré du creux (246) de l'extérieur, un nez (250) dépassant vers l'extérieur de la surface avant du corps encliquetable (248), et en ce que la face voisine (252) du boîtier (102) comporte un ressort à lame muni d'une encoche (254).

Fig. 1

Fig. 2

Fig. 6
Ansicht X

Fig. 5
Federndes Element

Fig. 7

Fig. 8
Ansicht Y

Fig. 3
Drehacke

Fig. 4

Reibfläche

Linkslenker Li
Rechtslenker Li

EP 0 208 333 B1

Fig.9

Fig-10

Fig. 14

107
108 156
110
142
136
150

Fig. 15

148 146
134 152
144
132

Fig. 11

111 119 110 102
158 149
107
143 154 148
130 138
Y

Fig. 12

149
143 145
119
120
147
121
102

Fig. 13

108 140 156 150 141
138 130
107

EP 0 208 333 B1

Fig. 17

Fig. 18

Fig. 16

EP 0 208 333 B1

EP 0 208 333 B1

Fig. 20

Fig. 21

Fig. 22

Ansicht X

Fig. 23

Fig. 19

6

102

226

225

222

204

220

220

218

202

227

216

206

234

230

232

208

210

206

214

212

Fig. 26

218

214

224

208

210

224

Fig. 25

Fig. 24

200

108

Fig. 27

Fig. 28

Fig. 29